**Europäisches Patentamt**

**European Patent Office**

**Office européen des brevets**

(19)

(11) Numéro de publication : **0 517 581 A1**

# (12) DEMANDE DE BREVET EUROPEEN

(21) Numéro de dépôt : **92401511.8**

(22) Date de dépôt : **03.06.92**

(51) Int. Cl.⁵ : **H02K 1/24,** H02K 19/22

(30) Priorité : **06.06.91 FR 9106855**

(43) Date de publication de la demande :
**09.12.92 Bulletin 92/50**

(84) Etats contractants désignés :
**DE ES GB IT**

(71) Demandeur : **VALEO EQUIPEMENTS
ELECTRIQUES MOTEUR
2, Rue André Boulle
F-94000 Creteil (FR)**

(72) Inventeur : **Galliet, Michel
6, Allée du moulin de Touillon
F-94370 Sucy-en-Brie (FR)**

(74) Mandataire : **Gamonal, Didier
VALEO Management Services, Service
Propriété Industrielle 30, rue Blanqui
F-93406 Saint-Ouen Cédex (FR)**

(54) **Alternateur sans bague collectrice, plus particulièrement, alternateur triphasé pour véhicules automobiles.**

(57)    Alternateur sans bague collectrice, et plus particulièrement alternateur triphasé pour véhicules automobiles, comportant notamment un ensemble statorique (15,16) enserré entre deux flasques (11,12) et un ensemble inducteur composé d'une partie mobile constituée de deux roues polaires (28,29) présentant à leur périphérie des griffes (31,32) reliées par un anneau (30) en matériau amagnétique et d'une partie fixe (25) solidaire du flasque (11) supportant une bobine inductrice (26) se présentant sous la forme d'un gradin étagé en deux parties (25a,25b).

EP 0 517 581 A1

La présente invention concerne un alternateur sans bague collectrice, et plus particulièrement un alternateur triphasé destiné aux véhicules automobiles.

Un tel alternateur comprend un ensemble inducteur en deux parties, l'une fixe et l'autre mobile en rotation, créant une variation de flux au regard d'un ensemble statorique constitué d'un paquet de tôles magnétiques annulaires empilées, comportant sur toute sa périphérie interne, une pluralité d'encoches permettant de loger le bobinage statorique.

La partie mobile en rotation de l'ensemble inducteur est constituée de deux roues polaires sur lesquelles sont ménagées une pluralité de griffes. L'une des roues polaires est rendue solidaire de l'arbre de l'alternateur, l'autre roue polaire étant rendue solidaire de la première par un élément en matériau amagnétique réalisé par exemple sous la forme d'un anneau circulaire de section rectangulaire, ledit anneau étant lui-même fixé sur les griffes des deux roues polaires par exemple par des vis ou des rivets.

Sur de tels alternateurs, l'un des problèmes à résoudre est de réduire son poids de manière à ce que en particulier sa fixation sur le bloc moteur en soit simplifiée.

Si dans ce domaine on peut agir facilement sur le carter de l'alternateur en utilisant par exemple des alliages en métaux légers, il n'en est pas de même en ce qui concerne les différents éléments constituant le circuit magnétique.

En effet, pour ces éléments, de la qualité et de la quantité des matériaux utilisés dépend le rendement global de l'alternateur.

Dans un alternateur sans balai, l'ensemble inducteur est constitué d'une partie mobile et d'une partie fixe dans laquelle est implantée une bobine inductrice.

On s'est aperçu qu'une réduction de poids sur la partie mobile constituée des deux roues polaires à griffes entraîne inévitablement pour celles-ci non seulement une perte de rendement du circuit magnétique mais aussi une diminution de leur tenue mécanique.

La présente invention résoud ces problèmes et propose à cet effet un alternateur sans bague collectrice, et plus particulièrement alternateur triphasé pour véhicules automobiles, comportant notamment un ensemble statorique enserré entre deux flasques, et un ensemble inducteur composé d'une partie mobile constituée de deux roues polaires présentant à leur périphérie des griffes reliées par un anneau en matériau amagnétique et d'une partie fixe solidaire du flasque supportant une bobine inductrice, caractérisé en ce que la partie fixe comporte deux parties cylindriques de diamètres différents et présente ainsi la forme d'un gradin étagé.

Selon d'autres caractéristiques de l'invention :
- la partie cylindrique adjacente au flasque c'est-à-dire vers l'extérieur de l'alternateur est d'un diamètre supérieur au diamètre de l'autre partie,

- la partie cylindrique de plus petit diamètre comporte la bobine inductrice,
- la différence entre les diamètres est comprise entre 1 et 4mm,
- la différence entre les diamètres est de préférence égale à 2mm.

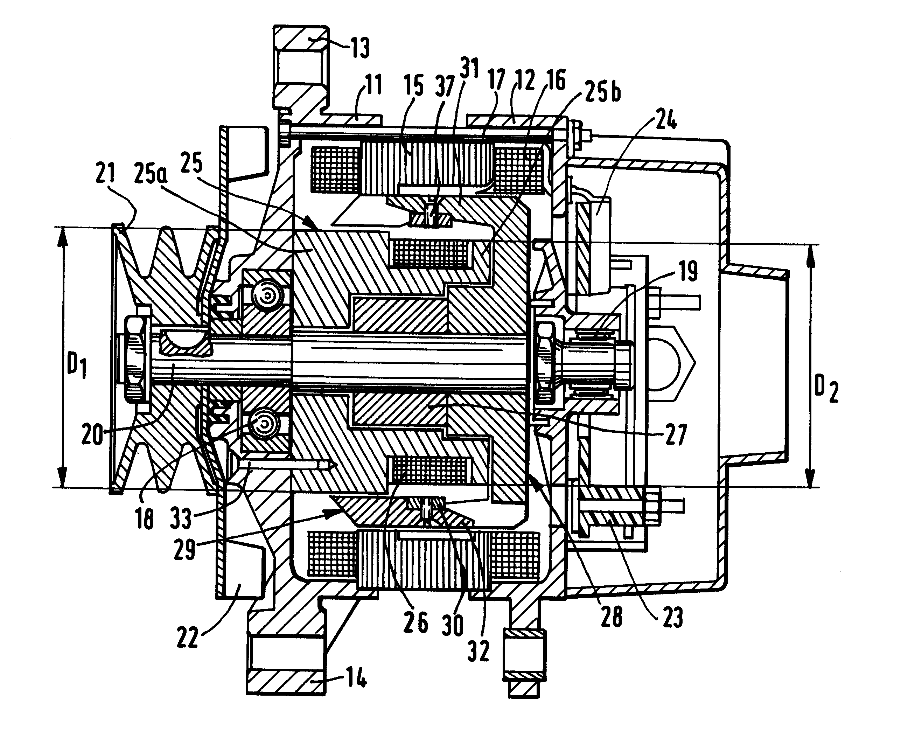

La description qui va suivre fera mieux comprendre comment l'invention peut être réalisée en regard de la figure unique annexée qui est une vue en coupe d'un ensemble alternateur suivant l'invention.

Un alternateur sans bague collectrice comprend un boîtier formé de deux flasques 11 et 12 munis d'oreilles de fixation respectivement 13,14.

Entre ces deux flasques 11,12 est enserré un ensemble statorique comprenant un noyau statorique 15 composé d'un paquet de tôles magnétiques annulaires empilées comportant sur toute sa périphérie interne une pluralité d'encoches, dans lesquelles est logé le bobinage statorique 16.

l'ensemble statorique est maintenu entre les deux flasques 11,12 par des vis 17.

Dans les flasques 11,12 sont agencés des paliers respectivement 18,19 destinés à recevoir un arbre de rotor 20.

Du côté du flasque 11, sont montés, solidaires en rotation de l'arbre de rotor 20, une poulie d'entraînement 21 et un ventilateur de refroidissement 22.

Sur la face extérieure du flasque 12, sont fixés un pont redresseur 23 associé à un régulateur 24.

L'ensemble inducteur comprend une partie mobile, solidaire en rotation de l'arbre de rotor 20, constituée d'une part d'un noyau 27, et d'autre part, d'un ensemble polaire à griffes formé de deux roues polaires 28,29.

La roue polaire 28 est portée directement par l'arbre de rotor 20, tandis que la roue polaire 29 est reliée à la roue polaire 28 par un anneau circulaire 30 en matériau amagnétique.

Chaque roue polaire 28,29 comporte à sa périphérie, des griffes respectivement 31,32 qui viennent s'imbriquer alternativement lorsque les deux roues polaires 28,29 sont assemblées.

L'anneau circulaire 30 est fixé aux roues polaires 28,29 par des vis 37.

L'ensemble inducteur comprend également une partie fixe 25 rendue solidaire du flasque 11 par des vis 33.

A l'intérieur de cette partie fixe 25 est incorporée une bobine inductrice 26.

Suivant l'invention, la partie fixe 25 se présente sous la forme d'un gradin étagé composé de deux parties cylindriques 25a,25b présentant respectivement des diamètres D1,D2.

La partie cylindrique 25a, de plus grand diamètre D1, est adjacente au flasque 11, c'est-à-dire est située vers l'extérieur de l'alternateur.

La partie cylindrique 25b, de plus petit diamètre D2 comporte la bobine inductrice 26.

La différence des diamètres D1,D2 peut être comprise entre 1 et 4mm et de préférence égale à 2mm.

Ainsi, la partie cylindrique 25a conserve un entrefer minimum en particulier avec la roue polaire 29, de manière à ne pas diminuer l'efficacité du circuit magnétique et donc le rendement de l'alternateur.

## Revendications

1) Alternateur sans bague collectrice, et plus particulièrement alternateur triphasé pour véhicules automobiles, comportant notamment un ensemble statorique (15,16) enserré entre deux flasques (11,12) et un ensemble inducteur composé d'une partie mobile constituée de deux roues polaires (28,29) présentant à leur périphérie des griffes (31,32) reliées par un anneau (30) en matériau amagnétique et d'une partie fixe (25) solidaire du flasque (11) supportant une bobine inductrice (26), caractérisé en ce que la partie fixe (25) comporte deux parties cylindriques (25a,25b) de diamètres différents (D1,D2) et présente ainsi la forme d'un gradin étagé.

2) Alternateur selon la revendication 1, caractérisé en ce que la partie cylindrique (25a) adjacente au flasque (11) c'est-à-dire vers l'extérieur de l'alternateur est d'un diamètre (D1) supérieur au diamètre (D2) de l'autre partie (25b).

3) Alternateur selon la revendication 1, caractérisé en ce que la partie cylindrique (25b) de plus petit diamètre (D2) comporte la bobine inductrice (26).

4) Alternateur selon la revendication 2 ou 3, caractérisé en ce que la différence entre les diamètres (D1,D2) est comprise entre 1 et 4mm.

5) Alternateur selon la revendication 4, caractérisé en ce que la différence entre les diamètres (D1,D2) est de préférence égale à 2mm.

Office européen
des brevets

**RAPPORT DE RECHERCHE EUROPEENNE**

Numero de la demande

EP     92 40 1511

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-U-8 906 555 (ROBERT BOSCH GMBH) <br> * page 8, ligne 28 - ligne 31 * <br> * page 18, ligne 26 - page 19, ligne 8; figure 2 * <br> --- | 1-3 | H02K1/24 <br> H02K19/22 |
| A | US-A-4 162 419 (L.E.DEANGELIS) <br> * colonne 3, ligne 37 - ligne 41; figure 1 * <br> --- | 1 | |
| A | DE-A-2 138 460 (LICENTIA-PATENTVERWALTUNS-GMBH) <br> * figure 2 * <br> ----- | 1 | |

|  |  |  | **DOMAINES TECHNIQUES RECHERCHES (Int. Cl.5)** |
|---|---|---|---|
|  |  |  | H02K |

Le présent rapport a été établi pour toutes les revendications

| Lieu de la recherche | Date d'achèvement de la recherche | Examinateur |
|---|---|---|
| BERLIN | 31 AOUT 1992 | LEOUFFRE M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P0402)